# EUROPEAN PATENT APPLICATION

(11) **EP 2 348 726 A1**
(43) Date of publication of application: **27.07.2011**
(21) Application number: 09382274.0
(22) Date of filing: 10.12.2009
(51) Int. Cl.: H04N 7/173

(54) **Device and procedure for deactivating a signal**

(71) Applicant: Alcatel-Lucent España, S.A., 28045 Madrid (ES)
(72) Inventor: Ruiz Alonso, Jaime, 28045 Madrid (ES); Balint, Zoltan, 2018 Antwerp (BE)
(74) Representative: Elzaburu Marquez, Alberto

(57) **Abstract**

An on demand video server device (15) comprising an extraction device adapted to extract from a command signal a play instruction differing from the normal play mode for viewing audiovisual content broadcast on demand; a verification unit adapted to verify whether the play instruction differing from the normal play mode has been received after a first mark of the start of a second audiovisual content, and in the affirmative case the server (15) deactivates the command signal received with the play instruction differing from the normal play mode.

## Description

### SCOPE OF THE INVENTION

This invention refers in general to a device for deactivating and activating an activation signal received in a broadcasting system of radio and television digital information services signals through a television decoding interface and transmitted from a control unit thereof.

### STATE OF THE ART

It is currently known in the art that an operator of a broadcasting system of digital information services of radio and television signals may record simultaneously the contents it disseminates through different services, namely television and radio channels on a transport network used for diffusion thereof, to a group of final subscribers to the digital services broadcasting system.

The audiovisual content and information associated with radio and television services are produced or collected in a headend source where they are compressed, multiplexed and adapted to the transport network which will transport them to the end users.

For example, a television channel includes a continuous session of audiovisual content in which other audiovisual material is intercalated in order to advertise something.

In the event that a subscriber cannot view the desired multimedia content during normal broadcasting the content may be viewed at a later date. The subscriber issues a selection signal to the headend from a control unit of a television-decoding interface, or set top box. In response to said selection signal, the multimedia content downloads from a storage unit in which the different television services broadcast are recorded, to the decoding TV interface of the subscriber. Obviously, the TV decoder interface is part of an interactive television system, requiring a return channel for the TV decoder interface.

The download not only includes the desired content but also other audiovisual content relating to advertisements previously associated with the material.

In general, a predetermined audiovisual content has a number of associated audiovisual advertisements, which may be located prior to the start, in the middle and at the end of a predetermined audiovisual content.

In the event that the final subscriber does not wish to view an audiovisual content containing an advertisement, he acts on the control unit of the TV decoder interface issuing a fast forward signal so that the speed of emission of the advertisement is increased. In this way the subscriber is able to avoid viewing the group of audiovisual advertisements associated by the header source with the audiovisual contents desired by the final subscribers.

### DESCRIPTION OF THE INVENTION

This invention seeks to resolve or reduce one or more of the disadvantages described above by means of a device and procedure for deactivating and activating the signal as defined in the claims herein.

In accordance with an embodiment the procedure for deactivating a control signal, relating to a mode of reproduction of an on demand audiovisual content broadcast by means of a data stream from an on demand video server ,which includes a first audiovisual content and at least a second audiovisual content, where the start and end of the second audiovisual content are marked with a first mark and a second mark respectively, with the aforementioned play command signal differing from the normal play mode of on demand audiovisual content, and which is deactivated in the event of being received in the video delivery medium or server unit, after a first mark of the start of a second audiovisual content.

In accordance with an embodiment, an insertion device of a system of broadcasting of digital information services of radio and television signals as a response to reception of an audiovisual data streaming which comprises a group of first audiovisual contents and a group of second audiovisual contents, all the contents of the stream are compressed and/or coded, multiplexed and adapted to the transport network which will transport them to the end users, introduces a first mark in order to indicate the start of a second audiovisual content and /or a second mark to indicate the end of the second audiovisual content.

The first and second marks are based on short trailers of image and/or voice samples.

The audiovisual content thus formed is broadcast from the header source to a plurality of end clients. The transport network may be a digital telecommunications network aimed at data packages such as an Internet protocol network.

The data streaming is recorded and stored in an on demand video server which includes a recording device, therefore, the server may store different services or television and radio channels broadcast on a transport network which transports the data streaming to a plurality of client devices which may be TV decoder interfaces, or set top boxes located in the homes of end clients; so that the end client may request download of a desired audiovisual content himself for viewing after its initial broadcast.

The video server comprises an extraction unit which may extract from a play instruction message differing from the normal mode of play for viewing audiovisual contents broadcast on demand, an indicator which identifies the requesting TV decoding interface and a play instruction differing from the norm such as fast forward playback for an audiovisual content which is being viewed on an audiovisual screen.

The server includes verification means for checking whether the aforementioned play instruction extracted has been received after a first mark signaling the start of a determined audiovisual content; if the verification is affirmative the verification means responds with a message instruction for deactivation of fast forwarding so that the video server ignores the message of different play instruction received.

In the event that the indicator extracted is received after a second mark signaling the end of a specific audiovisual content, in the event that the verification is affirmative, the means of verification responds with a message activating the fast forward play and rewind instruction so that the video server executes the different play instruction message received.

However, if while a message for activation of the fast forward play instruction is active, the means of verification finds that after an audiovisual content which is being played, there follows a first mark of the start of a content relating to an advertisement, the means of verification are adapted to respond sometimes with a message for deactivation of the different play instruction received.

It should be noted that the means of verification responds with a message activating a play instruction differing from the norm after a second signal of the end of an advertisement.

According to the above embodiment broadcasters prevent fast-forward during advertisements, and have a choice to enforce an ad-skipping policy.

### BRIEF DESCRIPTION OF THE FIGURES

A more detailed explanation of devices and/or methods in accordance with the embodiments of the invention is given in the following description based on the attached figures in which:

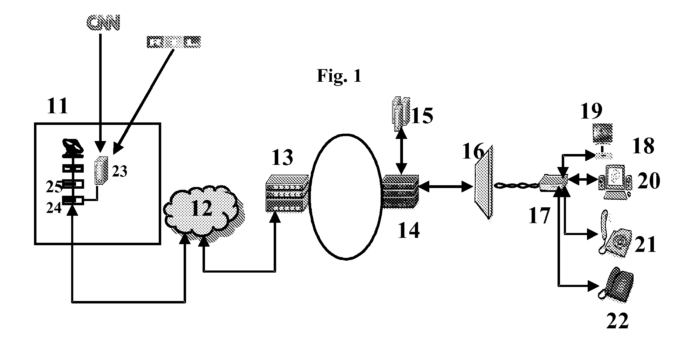

figure 1 shows a block diagram of a means of embodiment of the invention.

### EMBODIMENTS OF THE INVENTION

Figure 1 shows a broadcasting system of digital information services of radio and television signals in which a header source 11 receives different types of multimedia audiovisual content from different suppliers of multimedia contents, such as CNN, RTL etc.

The headend 11 comprises an encoder unit 25 which supplies in one of its outlets a group of first contents and a group of second audiovisual contents which are compressed and/or codified, multiplexed and adapted to a transport network 12 which transports a video data stream to the end users.

The transport network 12 may be digital telecommunications network aimed at data packages such as an Internet protocol network.

The television headend 11 may also include a first insertion device 24 connectable in cascade to an outlet of an encoder 25.

The first inserter 24 as response to reception of the video data stream supplied from the encoder 25 and a first message received from the header source 11, introduces a first mark of the start of a second audiovisual content and a second mark to signal the end of the second audiovisual content which may relate to an advertisement.

In a embodiment the first and second marks may be based on short trailers of image such as video frame or sequence of video frames; and/or voice samples such or sequence of voice samples; and /or content in teletext.

In other embodiment the marks for the start and end of each second audiovisual content may be based on a set timetable for start and finish of the broadcast of second audiovisual contents stored by the headend 11 and based on that timetable it generates the corresponding messages for inserting the marks that it transmits to the inserter device 24.

Between a start and end mark of a second audiovisual content different types of second audiovisual contents may be found.

The second audiovisual contents may be downloaded for example, from a first storage means or sequel store 23 of sequences of pictures and /or audio samples. Broadcaster 23 provides on a regular basis the sequels, sequence of pictures or audio samples, that they use for commercial session start and stop to the IPTV operator 24.

As mentioned previously, the first mark and the second mark relating to the second audiovisual contents are added to the video data stream supplied from the encoder 25, therefore the aforementioned marks are broadcast together with the coded video and are synchronized with the video content, indicating the start and end of each type of second audiovisual content or advertisement.

The transport network 12 such as an Internet protocol network, IP network transports an MPEG video stream on IP As a result, the TV header source 11 may be an IPTV head.

The data stream broadcast includes various types of services or audiovisual channels, for example, various types of television, radio channels etc.

It should be noted that a second content or advertisement may be located before, and/or in the middle and /or at the end of the first audiovisual content that may be selected by a client or end subscriber.

At the same time different types of second contents may be associated with a first type of content. Therefore, the headend 11 transmits an audiovisual data stream on IP which includes an ordered succession of first, second audiovisual contents and marks for the start and end of the second audiovisual contents distributed in services or channels to a plurality of end clients.

The video stream supplied from the inserter 24 is transported on the IP network 12 to at least one service streaming device 13 which is able to stream in turn the video stream received to various aggregate broad band devices 14 for their broadcast to a group of end subscribers.

Each end subscriber may be provided with various customer devices such as a television decoder interface 18 connected in turn to an audiovisual screen 19, a PC 20, an IP multimedia voice terminal 21, a telephone terminal 22 etc. which may be connectable to a modulator-demodulator device 17, MODEM or router gateway. The MODEM device 17 is connectable in turn to the service aggregator device 14.

An on demand video server medium 15 connectable to an aggregator device 14, includes a recording device for recording and storing at least one audiovisual channel forwarding in broadcast to the end clients from the inserter device 24.

That is, the recording is made while the data stream is broadcast in live or during the normal programming broadcast from the header source 11.

The recording device receives the video stream broadcast with the coded contents in live, for example, CNN or RTL television channel etc and stores them in a second storage medium such as a hard disk.

When an end client wishes for example, to view a specific programme relating to an audiovisual channel, which can be selected in live, that is, as it is currently being broadcast, the client makes the corresponding channel selection using an alphanumeric keyboard of a control unit, which communicates with the TV decoder interface 18.

Therefore, the desired programme of any channel selected may be viewed on the audiovisual screen 19.

However, if an end client cannot view a desired programme in live, the client may view said programme after its broadcast, provided the client issues a message requesting viewing of the desired programme to an on demand video server 15 through the decoder interface 18 with return channel for example.

The request message may be generated and issued from the control unit to the video server 15 through the TV interface 18 connected to the MODEM 17, to a digital subscriber line access multiplexer or DSLAM 16 and to the aggregator device 14.

The message request for a content received in the aggregator 14 is streamed to the corresponding video server 15 where it is received by an extraction device for extracting from the request message an identification indicator of the TV decoder interface 18 from which the message has been transmitted, a TV channel or service identification, a desired programme identifier and/or time of broadcast of the aforementioned programme.

When the recorder 15 has identified the programme requested by the end client, the video server 15 transmits the programme, first audiovisual content, requested together with a group of second audiovisual contents, associated by the inserter device 24 of the headend 11, that is, broadcasters during the live broadcasting thereof.

In general, the recorder 15 stores files relating to coded audiovisual content where each file includes an ordered group a first audiovisual content, at least a second audiovisual content, and a mark of the start and end of the second content or advertisement, according to how the first audiovisual content has been broadcast by the headend 11 during its normal programming.

A recorded file includes a video of a programme, the advertisements emitted before, during and after said programme which were associated with it for its broadcast, and the corresponding marks of each advertisement as information metadata.

The video server 15 transmits the corresponding file to the programme requested; in unicast TV watching TSTV, to the end client, where clearly adverstaiment insertion and fast-forward deactivation is transparent to the aggregator 14.

Obviously, the TV interface 18 from which the message request for a stored or recorded programme was transmitted will be the only interface able to decode the programme requested so that it can be shown on the audiovisual screen 19.

In the event that the final subscriber does not wishes to view the second audiovisual contents, while they are shown on the audiovisual screen 19, the subscriber acts on a control unit to generate an instruction signal for play differing from the normal play mode in order to view the on demand audiovisual contents broadcast, the instruction signal is transmitted from the client device 18 to the on demand video server 15.

The server extractor 15 extracts from the message received an indicator from the client device from which the message has been transmitted with a play instruction differing from normal play, for example, an indication relating to an instruction for fast forward or playback.

The video server 15 also includes means for verification or checking that the aforementioned fast forward indication has been received, and verifies whether the indicator extracted has been received after a first mark which indicates the start of a second audiovisual content; in the event that the verification is received, the means for verification respond with a message deactivating the fast forward instruction received.

The detection of the mark the stop and start of the second content is based on unconventional magic, voice sample recognition, video image recognition, or other non-conventional trickery like content in a teletext page.

Therefore, the video server 15 continues to download the file corresponding to the desired programme at an adequate speed so that the first content may be viewed on the audiovisual screen 19 by the end client.

In the event that the indicator extracted has been received after a second mark signaling the end of the first audiovisual content, the means for verification respond with a message activating the fast forward signaling, so that the first content desired by the end client is shown on the audiovisual screen 19 at a speed differing from the speed of normal play in order to view it.

However, if while a message for activation of the fast forward play instruction is active, the means of verification finds that after an audiovisual content which is being played, there follows a first mark of the start of a content relating to an advertisement, the means of verification are adapted to respond with a message for deactivation of the different play instruction received. Therefore, when the client wants to see the last 10 minutes of a recording, he is not obliged to stop when reaching a second content.

It should be noted that the means of verification responds with a message activating an instruction for play differing from the norm after a second signal for the end of an advertisement.

Furthermore, the verification means may avoid responding with the message of deactivation of a fast forward playback instruction if the identifier corresponding to the TV interface 18 from which the aforementioned instruction has been transmitted is included in a table per channel of end client profiles stored in a storage unit which is connectable to the on demand video server 15. That is, this sub group of end clients are subscribers to a content provider and /or a header source so that they avoid having the fast forward playback function deactivated.

The on demand video server 15 includes a processor medium, which receives the messages for downloading programme through an extraction unit.

The processor governs and controls the recording through multimedia data stream broadcast from the header source 11 to end clients with recording of the same, which is made simultaneous to its broadcast.

The processor is able to check the simultaneous time of a first mark of the start of an advertisement and a fast forward playback identifier, and also the simultaneous time of a second mark of the end of an advertisement and a fast forward playback identifier received.

The checker uses a group of measurements to carry out the time check of the first and second mark with a fast forward play identifier, and as a result of said verification, it activates or deactivates the fast forward message.

The activation/deactivation procedure may be made through a computer, which is loadable in an internal memory of a computer with input and output and outlet units and also processor units.

The computer programme includes for this purpose code configured to execute the steps of the aforementioned process when it is executed by the computer.

## Claims

1. **A deactivation procedure** for a command signal relating to a play mode of an on demand audiovisual content broadcast through a data stream; with the signal transmitted from a client device (18) to an on demand video server medium (15) **characterized in that** the procedure includes the step of deactivating the play command signal differing from the normal play mode for on demand audiovisual content broadcast through a data stream from the video server medium (15), where the aforementioned stream includes a first audiovisual content and at least one second audiovisual content, with the start and end of the second audiovisual content being marked with a first and second mark respectively; with the aforementioned play command signal being deactivated in the event of being received in a video server medium (15) after a first signal of the start of a second audiovisual content.

2. **Deactivation procedure** according to claim 1; wherein the first and second marks are based on short trailers of image and/or voice samples.

3. **An on demand video server device** for response to a command signal, relating to the play mode of an on demand audiovisual content broadcast by a data stream; with the command signal transmitted from a client device (18); **characterized in that** the on demand video server (15) includes an extraction device adapted to extract from the command signal received a play instruction differing from the normal play mode for viewing audiovisual content broadcast on demand; a verification unit adapted to verify whether the play instruction differing from the normal play mode has been received before or after the first mark of the start of a second audiovisual content.

4. **Server device** according to claim 3; **characterized in that** the server (15) deactivates the command signal received with the play instruction differing from the normal play mode as response to a message issued by the verification unit in the event that the play instruction differing from the normal play mode has been received after a first mark of the start of a second audiovisual content.

5. **A header source** of a broadcasting system of radio and television digital information services diffuses a coded audiovisual data stream, multiplexed and adapted to transport through a transport network (12), comprising a group of first audiovisual content and a group of second audiovisual contents: **characterized in that** the header source (11) includes a coder unit (25) which supplies the audiovisual data stream to a first inserter device (24) which in response to a first message received from the header source (11) relating to the location of second audiovisual content, is adapted to introduce a first mark of the start of a second audiovisual content and a second mark in order to signal the end of the second audiovisual content in the data stream broadcast.

6. **Header source** according to claim 5; wherein the first and second marks are based on short trailers of image and/or voice samples

7. **A computer programme** may be loaded in an internal memory of a computer with entry and outlet units, and a processing unit where the computer comprises executable codes configured to carry out the steps in the deactivation procedure of a command signal relating to a mode of play of an on demand audiovisual content broadcast through a data stream with the signal being transmitted from a client device (18) to an on demand video server medium (15) in accordance with claim 1 or 2 when it is executed by the computer.
